Europäisches Patentamt

European Patent Office

Office européen des brevets

(19)

(11) **EP 0 752 690 A1**

(12) **DEMANDE DE BREVET EUROPEEN**

(43) Date de publication:
 **08.01.1997 Bulletin 1997/02**

(51) Int Cl.6: **G08C 19/22**, H04Q 9/00

(21) Numéro de dépôt: **96401466.6**

(22) Date de dépôt: **03.07.1996**

(84) Etats contractants désignés:
 **DE ES GB IT**

(30) Priorité: **04.07.1995 FR 9508047**

(71) Demandeur: **SAFT**
 **F-93230 Romainville (FR)**

(72) Inventeurs:
 • **Morin, Christophe**
  **86530 Cenon s/Vienne (FR)**

 • **Perelle, Michel**
  **37210 Parcay-Meslay (FR)**

(74) Mandataire: **Schaub, Bernard**
  **c/o ALCATEL ALSTHOM,**
  **Département de Propriété Industrielle,**
  **30, avenue Kléber**
  **75116 Paris (FR)**

(54) **Procédé de transmission d'ordres par impulsions d'une unité de commande à une pluralité de modules et agencement pour la mise en oeuvre de ce procédé**

(57) Procédé de transmission d'ordres par impulsions à différents modules (2) par une unité de commande (3) qui émet des impulsions par trains au rythme d'une horloge commune pour la transmission des ordres aux modules. Les ordres de variation d'une commande dans un premier sens, de variation dans un second sens et de maintien d'ordre en un état inchangé sont respectivement transmis chacun par une suite particulière de deux impulsions, ces impulsions étant d'un premier ou d'un second type.

Chaque module doté de moyens pour prélever les impulsions d'ordre qui lui sont destinées dans chaque train et pour transférer les autres impulsions du même train en vue de la continuation de leur transmission, comporte aussi des moyens de sélection, pour commander l'évolution à apporter à chaque commande du module, en fonction du type des impulsions d'ordre transmises en même position au cours des trains successifs pour la commande considérée.

FIG.1

EP 0 752 690 A1

## Description

L'invention concerne un procédé de transmission d'ordres, telles que des ordres de variation par pas ou de marche-arrêt, d'une unité de commande à une pluralité de modules d'un ensemble et un agencement pour la mise en oeuvre de ce procédé dans un ensemble comportant de tels modules. L'exploitation de certains ensembles constitués de manière modulaire est susceptible d'être nettement optimisée, notamment lorsque le nombre des modules est relativement grand, s'il est possible de commander facilement le fonctionnement individuel des modules. Tel peut être le cas dans le cas d'ensembles comportant un grand nombre d'éléments dont il est prévu d'assurer la commande et/ou la supervision à l'aide d'une unité de commande commune secondée par une pluralité de modules chargés chacun d'un élément ou d'un petit groupe d'éléments. Ces ensembles sont composés par exemple par des éléments de batterie d'accumulateur de grande capacité pour véhicule électrique, par des cellules de supercondensateur ou par des cellules de superconvertisseur électrique.

La réalisation d'un agencement apte à réaliser de telles opérations qui peut paraître simple en son principe, se complique en fait dès que le nombre d'éléments et donc de modules correspondants devient grand.

Le nombre élevé de fils de commande et de supervision alors impliqués conduit généralement à des réalisations relativement lourdes impliquant la mise en place de moyens de commutation nécessitant un nombre élevé d'unités commutantes qui, notamment si ces moyens sont de type électromagnétique, ont conduit à ce que de tels agencements ne soient que peu exploités, et seulement le plus souvent pour des réalisations particulières où ils sont pratiquement inévitables.

L'invention propose donc un procédé de transmission d'ordres, telles que des ordres de variation par pas ou de marche-arrêt, par impulsions d'une unité de commande à différents modules d'un ensemble par l'intermédiaire d'une liaison.

Selon une caractéristique de l'invention, l'unité de commande émet des impulsions produites au rythme d'une horloge commune et regroupées par train pour la transmission des ordres aux modules et les ordres de variation d'une commande dans un premier sens, de variation dans un second sens et de maintien en un état inchangé sont respectivement transmis chacun par une suite particulière de deux impulsions, ces impulsions étant d'un premier ou d'un second type.

Selon une caractéristique de l'invention, l'unité de commande émet des impulsions produites au rythme d'une horloge commune et regroupées par train pour la transmission des ordres aux modules, deux impulsions d'ordre émises par l'unité de commande à destination d'une commande déterminée pour un module déterminé au cours de trains successifs, sont d'un même premier type, lorsqu'elles correspondent à un ordre de variation de cette commande dans un premier sens de variation donné. Ces impulsions sont d'un second type, lorsqu'elles correspondent à un ordre de variation de cette commande dans un sens de variation inverse du premier sens de variation donné et ces impulsions alternent successivement de type, lorsqu'elles correspondent à un ordre de maintien de ladite commande en un état inchangé. L'invention propose aussi un agencement pour la mise en oeuvre du procédé évoqué ci-dessus, dans un ensemble incorporant au moins une unité de commande qui transmet des ordres sous la forme d'impulsions regroupées par trains successifs pour agir sur des commandes dans différents modules reliés à une liaison transmettant ces trains d'impulsions, chaque module comportant lui-même au moins un sous-ensemble, dit de traitement d'ordre, recevant les impulsions qui sont transmises à ce module par la liaison, ce sous-ensemble comportant des moyens pour prélever la ou les impulsions d'ordre destinées au module dans chaque train et pour orienter les autres impulsions du même train en vue de la continuation de leur transmission.

Selon une caractéristique de l'invention, chaque module comporte des moyens de sélection, pour commander l'évolution à apporter à chacune des commandes du module, en fonction du type des impulsions d'ordre transmises en même position au cours des trains successifs pour la commande considérée. L'invention, ses caractéristiques et ses avantages sont précisés dans la description qui suit en liaison avec les figures évoquées ci-dessous.

La figure 1 présente un exemple d'ensemble doté d'un agencement selon l'invention.

La figure 2 présente un chronogramme relatif au procédé de transmission d'ordre selon l'invention.

La figure 3 présente un exemple de réalisation d'un sous-ensemble de traitement d'ordre pour module d'un ensemble destiné à mettre en oeuvre le procédé selon l'invention.

La figure 4 présente un chronogramme relatif au fonctionnement d'un sous-ensemble de traitement d'ordre tel que présenté sur la figure 3.

La figure 5 est une vue partielle relative à une variante du sous-ensemble de traitement d'ordre présenté figure 3. L'ensemble 1 présenté en figure 1 est supposé comporter une pluralité de modules 2 recevant des ordres transmis depuis une unité de commande 3, par exemple une logique de commande chargée d'en superviser le fonctionnement. Cette unité est par exemple organisée autour d'un microcontrôleur non représenté. Elle transmet ses ordres aux modules 2 sous forme série par l'intermédiaire d'une liaison 4 qui est supposée ici ménagée par tronçons courant d'un module à l'autre.

Les ordres sont transmis sous la forme d'impulsions, par exemple d'impulsions électriques, comme supposé ici. Dans une forme préférée de réalisation, la liaison 4 est réalisée en boucle et se referme au niveau de l'unité de commande 3 et chacun des modules 2 est relié à la boucle par deux ports E/s, de type entrée-sortie, de manière que les impulsions puissent alternativement être transmises soit dans un sens sur la boucle, soit en sens inverse, notamment pour des raisons de sécurité et de fiabilité.

Les modules 2 sont supposés fonctionnellement compatibles, ils sont donc constitués de manière au moins similaire et éventuellement identique, comme dans l'exemple de réalisation qui sera évoqué plus loin.

Chaque module 2 comporte donc un sous-module 5, dit de traitement d'ordre, assurant le prélèvement et la prise en compte des impulsions parvenant à destination du module qui le comporte, par la liaison 4 et via l'un ou l'autre des deux ports E/S d'entrée-sortie de ce module, ainsi que la transmission des impulsions destinées aux modules situés en aval sur la liaison 4 dans le sens de transmission alors en vigueur.

Chaque module 2 comporte aussi un sous-module d'exploitation 6 par l'intermédiaire duquel les ordres reçus sous forme d'impulsions sont appliqués aux commandes qu'elles concernent.

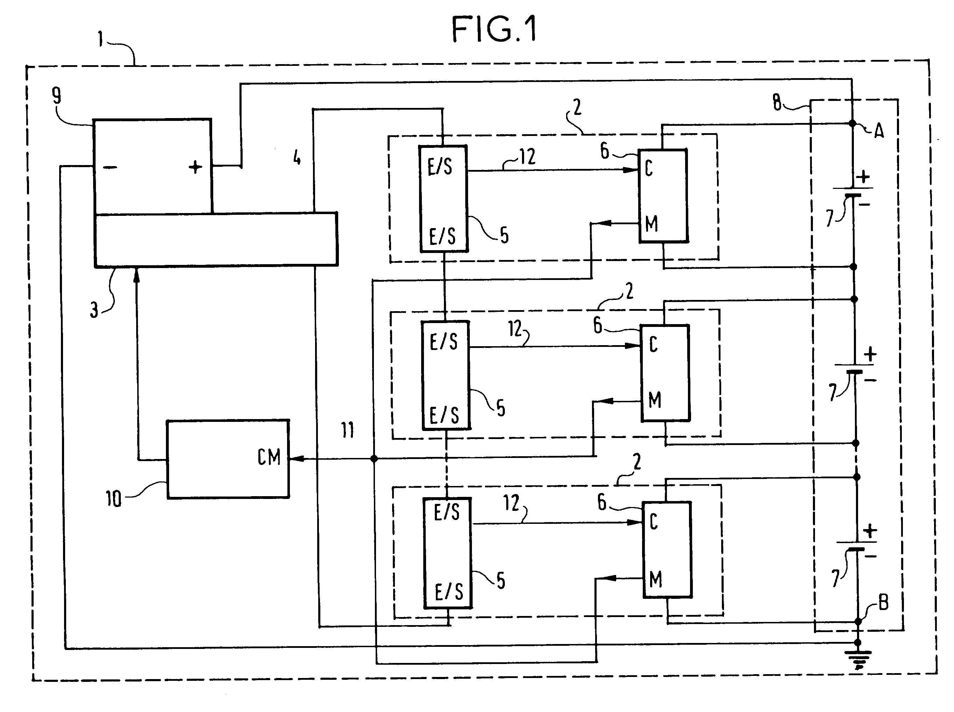

Dans l'exemple de réalisation envisagé sur la figure 1, les sous-modules d'exploitation 6 sont destinés à être associés chacun à un ou éventuellement plusieurs éléments 7 d'une batterie d'accumulateur électrique 8, afin d'en permettre la recharge dans des conditions optimales prédéterminées, par l'intermédiaire d'un chargeur 9 et sous la supervision de l'unité de commande 3. Pour des raisons de simplification de l'exposé, il ne sera par la suite fait état que d'un élément 7 par sous-module, bien que comme indiqué ci-dessus un même sous-module puisse aussi être affecté à un groupe d'éléments. Sur la figure 1, le chargeur 9 est montré relié aux bornes d'extrémité A, B de la batterie 8 et chaque sous-module d'exploitation 6 est montré relié aux bornes d'alimentation d'un élément 7 dont par exemple il surveille la tension et sur le courant de charge duquel il peut par exemple agir. Un tel sous-module d'exploitation 6 comporte des moyens de mesure de tension, connus en eux-mêmes, qui lui permettent de fournir des résultats de mesure à l'unité de commande 3, via par exemple une unité commune de collecte de mesures 10, associée à cette unité de commande. Ceci est symbolisé par une liaison, dite de mesure, 11 supposée établie entre une sortie de mesure M prévue sur chaque sous-module d'exploitation 6 et une entrée commune CM de l'unité de collecte de mesures 10.

A réception des résultats des mesures, l'unité de commande 3 produit des ordres sous forme impulsionnelle à destination de commandes localisées dans les sous-modules d'exploitation 6 pour lesquels des actions sont à entreprendre. Ces ordres sont transmis par l'intermédiaire de la liaison 4 d'un module 2 à l'autre, ou plus précisément d'un sous-module de traitement d'ordre 5 à l'autre, jusqu'à leurs destinataires respectifs. La voie de transmission des impulsions d'un sous-module 5 au sous-module d'exploitation 6 du module 2, qui comporte ces sous-modules, est ici symbolisée par une liaison dite d'ordre 12 aboutissant au niveau d'une entrée C sur le sous-module d'exploitation 6.

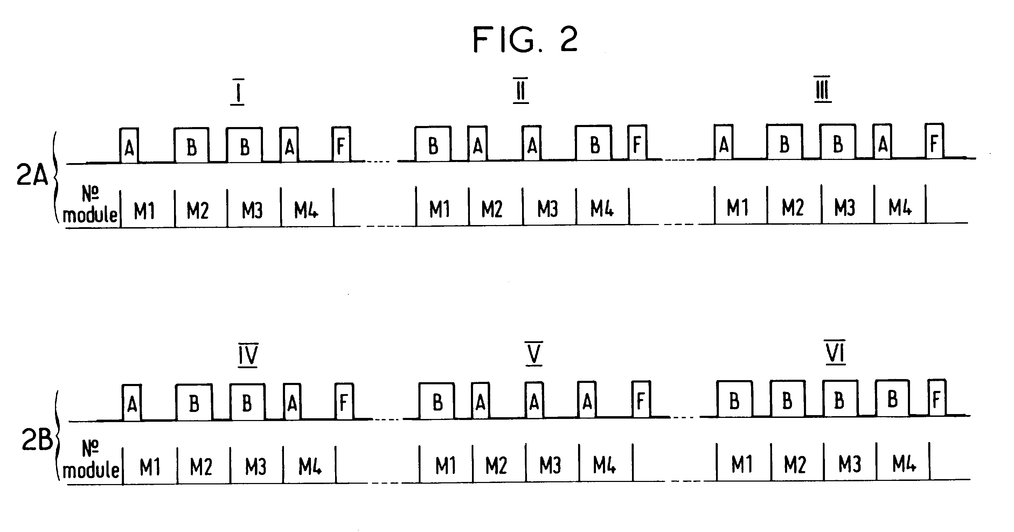

La transmission des impulsions de l'unité de commande 3 vers les différents modules 2 via la liaison 4 est destiné à être réalisée selon un procédé qui est défini ci-dessous en liaison avec le chronogramme présenté sur la figure 2. Selon ce procédé, et comme indiqué plus haut, il est prévu de transmettre les ordres sous la forme de trains d'impulsions ici supposés émis par l'unité de commande 3 sur la liaison 4. Le nombre d'impulsions constituant chaque train est fixé au moins égal à celui des modules 2. Il est prévu que chaque module prélève pour lui-même au moins une première des impulsions qu'il reçoit d'un tronçon de liaison 4, via l'un de ses deux ports E/S, à chaque nouveau train et qu'il transmette les éventuelles impulsions suivantes de ce même train, cette transmission s'effectuant par l'autre de ses ports E/S et via un autre tronçon de la liaison 4. Le choix du nombre d'impulsions à conserver par chaque module à chaque train est prévu prédéterminé, il dépend notamment du nombre de commandes actionnables qui sont prévues par module.

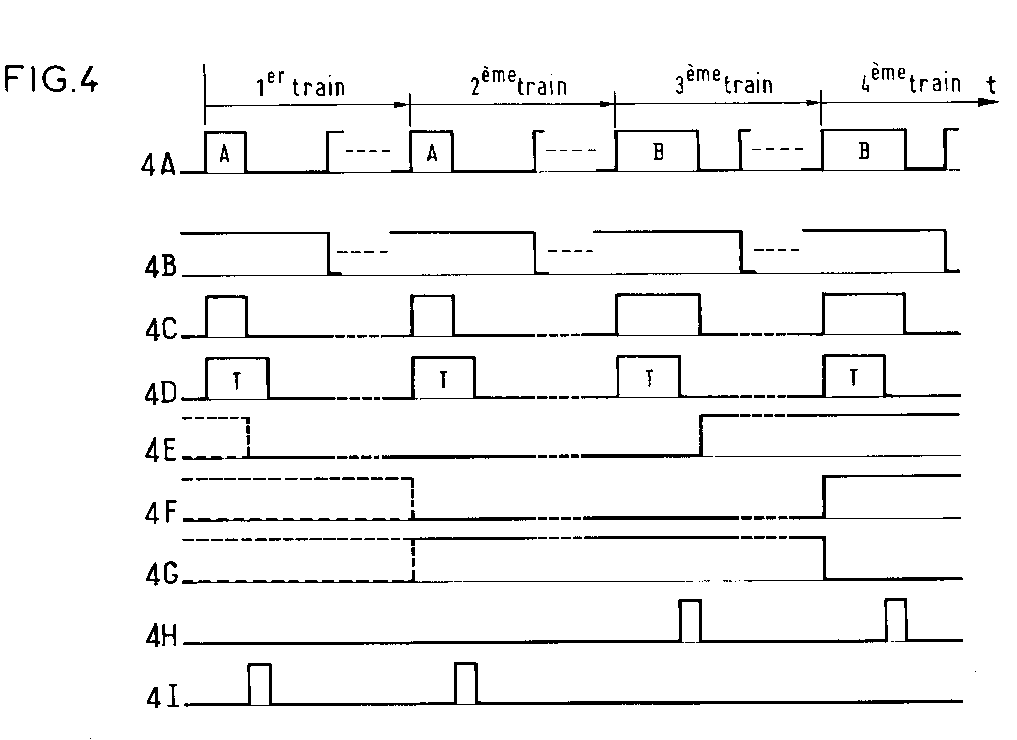

Dans un exemple de réalisation simplifié pour faciliter la compréhension qui est pris en compte pour l'élaboration du chronogramme présenté en figure 4, il est envisagé un ensemble théorique de seulement quatre modules 2 ne conservant chacun que la première impulsion reçue pour chaque train. Dans la réalité le nombre de modules interconnectés en série par la liaison 4 est susceptible d'être beaucoup plus grand, par exemple si les modules sont individuellement associés aux éléments d'une batterie d'alimentation d'un véhicule électrique.

Dans une forme préférée de réalisation, les impulsions sont émises au rythme d'une horloge commune et les trains sont temporellement dissociés les uns des autres ainsi que le montre le diagramme 2A. Dans un exemple théorique envisagé ici, chaque train comporte quatre premières impulsions, dites d'ordre, destinées à être captées et exploitées chacune par l'un des quatre modules de l'ensemble desservi et une impulsion de fin de train destinée à revenir à l'unité de commande 3 qui l'a émise, après avoir parcouru la boucle que forme la liaison 4, dans l'exemple ici envisagé. Du fait du procédé choisi et dans l'exemple envisagé, il est prévu une correspondance directe entre les dispositions relatives des impulsions d'ordre d'un train émis depuis l'unité de commande 3 et les dispositions relatives des modules au long de la liaison 4. La première impulsion d'ordre émise par l'unité de commande 3 à destination d'un premier module 2 relié à elle par un premier tronçon de liaison 4 est captée et exploitée par ce premier module. La première impulsion d'ordre suivante est transmise par ce premier module vers un second module auquel il est relié par un second tronçon de liaison 4, ce second module capte et exploite cette impulsion d'ordre et il en va de même pour les autres impulsions d'ordre suivantes du même train vis-à-vis des modules suivants.

Comme il a été indiqué plus haut, dans une forme préférée de réalisation, il est aussi possible de transmettre des trains d'impulsions en sens inverse de celui envisagé ci-dessus via la liaison 4. Ceci conduit alors à ce que la première impulsion d'ordre émise pour un train émis dans ce sens inverse soit captée et exploitée par le module précédemment considéré comme étant le dernier. La dernière impulsion d'ordre émise est alors captée et exploitée par le module précédemment considéré comme étant en premier.

Selon l'invention, il est prévu d'exploiter des impulsions de types différents, par exemple des impulsions de type binaire qui se différencient par leur largeur tout en conservant un même temps de cycle, comme montré sur le diagramme 2A pour les impulsions respectivement référencées A et B. Ceci permet d'envisager la transmission d'ordres qui ne soient pas seulement de simples ordres de déclenchement, de type marche-arrêt, et en particulier la transmission d'ordres permettant de faire évoluer des commandes pas à pas au niveau des modules à partir de l'unité de commande par l'intermédiaire de trains d'impulsions successifs.

Les ordres de variation d'une commande dans un premier sens, de variation dans un second sens et de maintien en un état inchangé sont respectivement transmis chacun par une suite particulière de deux impulsions, ces impulsions étant d'un premier ou d'un second type.

Dans une forme de mise en oeuvre du procédé selon l'invention, il est prévu le passage d'un type d'impulsion à l'autre pour les impulsions ayant même position qui sont donc destinées à une même commande d'un même module au cours de trains successifs, lorsque l'ordre précédemment fixé par l'intermédiaire d'impulsions ayant la position considérée ci-dessus reste inchangé.

Le sens à donner ici au terme "position" relativement aux impulsions des trains est celui qui est classiquement utilisé dans le domaine des transmissions numériques, à titre d'exemple les impulsions situées en position trois d'une suite de trains transmis sont celles qui sont respectivement transmises en troisième et donc après deux autres impulsions dans chacun des trains.

Par contre la conservation d'un même type d'impulsion en même position au cours de deux trains successifs est choisie pour traduire un ordre de variation, lorsque les trains successifs sont transmis dans le même sens. Un tel ordre implique par exemple une réduction du niveau d'une commande si deux impulsions successives sont d'un premier des deux types et une augmentation du niveau de cette commande, si les impulsions sont du second des deux types. Ces augmentations et réductions sont susceptibles d'être prévues commandées par pas correspondants chacun à des demandes de variations de niveau régulières ou non en fonction des besoins pour chacune des commandes concernées.

Bien entendu si la transmission de deux trains successifs s'effectue en sens inverse pour l'un par rapport à l'autre, la conservation d'un même type d'impulsion ne concerne plus les impulsions de même rang, mais l'impulsion d'un rang donné d'un train et l'impulsion de rang inverse du train suivant, telles la conservation du même type d'impulsion pour la première impulsion d'un train et pour la dernière du suivant, pour la seconde d'un train et l'avant-dernière du suivant et ainsi de suite.

Un exemple simplifié est graphiquement présenté sur le chronogramme de la figure 2. Le diagramme 2A est supposé montrer trois trains successifs transmis dans un même sens et respectivement référencés I, II, III comportant chacun quatre impulsions d'ordre référencées A ou B. Il est aussi possible d'ajouter une ou des impulsions supplémentaires aux trains d'impulsions d'ordre, par exemple une impulsion de fin de train référencée F, comme indiqué ici. Les quatre impulsions d'ordre sont supposées respectivement destinées à quatre modules successivement référencés de M1 à M4 selon leur position par rapport à l'unité de commande dans l'un des sens de transmission via la liaison 4. Dans le cas présenté et par exemple suite à des opérations antérieures, le premier train référencé I comporte une suite d'impulsions A, B, B, A composée de deux impulsions de type B caractérisées par un niveau haut de même durée plus longue que celle du niveau haut des impulsions de type A qui les encadrent. Le train II suivant comporte une suite d'impulsions B, A, A, B qui traduisent un ordre de maintien en l'état des ordres au niveau des modules, référencés M1 à M4 sur le diagramme 2A, au vu des choix effectués au niveau du procédé qui ont été indiquées plus haut. Il en est de même dans le cas du train référencé III.

Le diagramme 2B correspond à un exemple où il y a incrément d'ordre pour le module référencé M1 par l'intermédiaire des impulsions en première position des trains V et VI, statut quo pour les modules référencés M2 et M3 et décrément pour le module référencé M4 par l'intermédiaire des impulsions en quatrième position des trains IV et V.

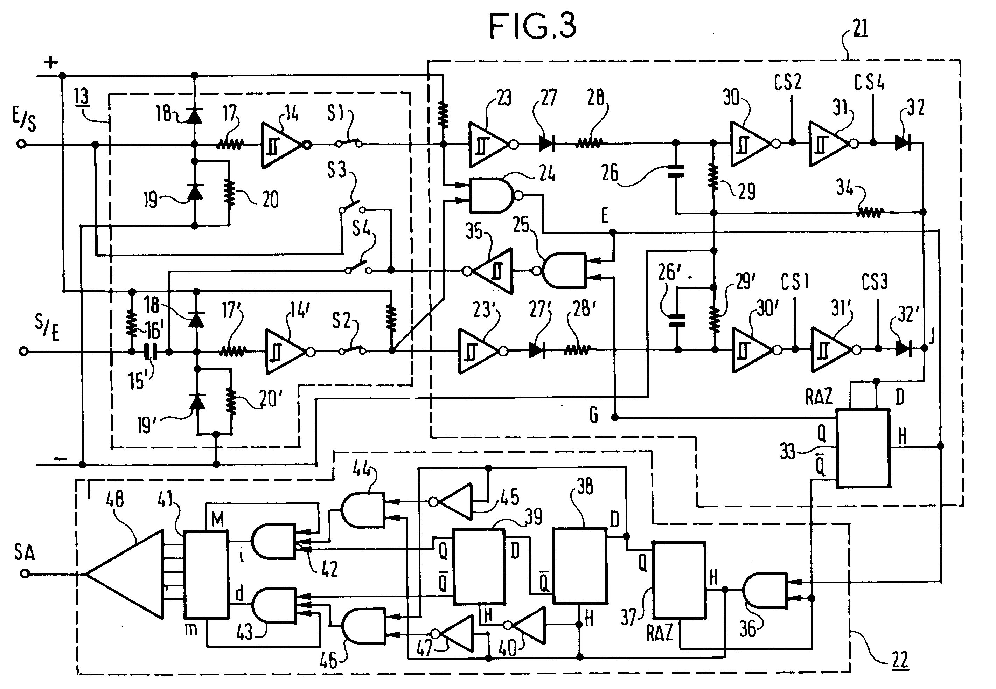

Comme déjà indiqué plus haut, la figure 3 présente un exemple de sous-ensemble de traitement d'ordre 5 pour module d'un ensemble destiné à mettre en oeuvre le procédé évoqué ci-dessus. Ce sous-ensemble est destiné à être inséré entre deux tronçons successifs de la liaison 4 à chacun desquels il se raccorde par un port E/S différent, ces ports étant ici respectivement référencés E/S et S/E sur cette figure à des fins de différenciation.

Chacun des ports E/S et S/E d'un sous-ensemble de traitement d'ordre 5 permet alternativement de recevoir ou de transmettre des impulsions qui sont susceptibles de lui parvenir de l'unité de commande 3 sous forme de trains, par l'intermédiaire de la liaison 4.

La première impulsion d'un train qui est reçue par un des ports E/S ou S/E d'un module 2, est destinée à être exploitée par un circuit de sélection 22 en tant qu'ordre vis-à-vis d'une commande donnée, après avoir transité par le circuit de commande de module 21 associé à ce circuit de sélection. L'ordre que sert à transmettre cette impulsion a par exemple été déterminé par l'unité de commande 3 en fonction de l'évolution de l'état de l'ensemble qui la comporte tel que constatée par cette unité de commande 3. Dans l'exemple simplifié envisagé, la première impulsion est considérée comme destinée à être exploitée pour la commande du sous-module d'exploitation 6 du module 2 qui la capte à la réception.

Dans le cas de cet exemple simplifié, la ou les impulsions suivantes éventuellement reçues du même train par un même port sont transmises plus avant par un module, via l'autre des deux ports de ce module.

Un montage d'entrée-sortie 13 est associé aux deux ports E/S, S/E dans chaque sous-ensemble de traitement d'ordre 5. Ce montage est composé de deux parties qui sont respectivement affectées chacune à un des ports et qui sont individuellement associées à des organes de commutation. Ces derniers sont ici symbolisés par quatre contacts référencés S1 à S4, ils sont supposés commandés par des signaux prélevés à des niveaux du sous-ensemble de traitement d'ordre 5 qui sont respectivement référencés CS1 à CS4 sur la figure 3. En pratique, les organes de commutation sont préférablement réalisés sous forme électronique par exemple sous la forme d'interrupteurs C-MOS.

Deux d'entre eux sont destinés à transmettre les impulsions susceptibles de parvenir au montage via l'un des ports desservis, tels ici l'organe de commutation S1 pour les impulsions provenant du port E/S et l'organe de commutation S2 pour celles provenant du port S/E.

Les deux autres organes de commutation sont destinés à transmettre les impulsions qui ont été reçues de la liaison 4 par le montage d'entrée-sortie 13 et qui sont destinées à être émises vers un autre module 2, soit via le port E/S pour l'organe S3, soit via le port S/E pour l'organe S4. En l'absence d'impulsion parvenant par l'un ou l'autre des ports E/S, S/E, les organes de commutation S3 et S4 sont bloquants et les organes de commutation S1 et S2 sont passants en attente d'une impulsion dont l'arrivée chargera l'un ou l'autre des condensateurs 26, 26'.

Par ailleurs, comme indiqué plus haut, un montage d'entrée-sortie 13 comporte deux parties, une première d'entre elles comporte un inverseur logique 14, de type amplificateur inverseur à seuil. Cet inverseur est attaqué par les impulsions provenant du port E/S au travers d'une résistance.

L'inverseur 14 du montage d'entrée-sortie 13 est ici supposé alimenté entre des bornes "-" et "+" qui sont par exemple celles de l'élément 7 auquel est associé le module 2 comportant ce montage, il en est éventuellement de même pour d'autres composants du même module. Deux diodes 18 et 19, montées en série entre les bornes "-" et "+" considérées ci-dessus, constituent un montage écrêteur où l'anode de la diode 18 et la cathode de la diode 19 sont reliées au port E/S et à la résistance 17. Une résistance 20 en parallèle à la diode 19, fixe le potentiel en l'absence d'impulsion en provenance-du port E/S et complète cette première partie de montage d'entrée-sortie 13. Cette première partie est destinée à transmettre les impulsions des trains qu'elle reçoit à un circuit de commande de module 21, via l'organe de commutation S1. Elle est aussi prévue pour retransmettre, via le port E/S et via l'organe de commutation S3, toute impulsion qui a été reçue par le circuit de commande 21 en provenance du port S/E et qui n'est pas destinée à être exploitée par ce circuit.

La seconde partie que comporte le montage d'entrée/sortie 13 a un rôle analogue. Cette seconde partie est agencée pour relier le port d'entrée S/E au circuit de commande 21, via l'organe de commutation S2, d'une manière voisine de celle mise en oeuvre dans la première partie pour le port d'entrée E/S, via l'organe de commutation S1. Elle comporte donc des composants référencés de 14' à 20' qui correspondent aux composants référencés de 14 à 20 décrits ci-dessus, à l'exception d'un condensateur 15' d'élimination de composante continue inséré entre le port S/E et le point commun aux diodes 18', 19' et à la résistance 17', ainsi que d'une résistance 16' insérée la borne "+" et le point commun au condensateur 15' et au port S/E. Cette seconde partie de montage d'entrée/sortie 13 permet de transmettre, via le port S/E et via l'organe de commutation S4, toute impulsion qui a été reçue par le circuit de commande 21 en provenance du port E/S et qui n'est pas destinée à être exploitée par ce circuit. L'inverseur 14' reçoit les impulsions qui lui sont éventuellement transmises par le port S/E, via le condensateur 15' lorsque ce port est exploité en tant qu'entrée. La résistance 16' permet de fixer le potentiel du point commun au condensateur 15' et au port S/E en l'absence d'impulsion reçue au travers de ce dernier.

Le circuit de commande 21 comporte un inverseur logique 23, de type amplificateur inverseur à seuil, et une porte 24, de type NAND, l'un et l'autre susceptibles d'être reliés par une entrée en sortie de l'inverseur 14, via l'organe de commutation S1. Il comporte aussi un inverseur 23', de même type que l'inverseur 23, qui est susceptible d'être relié par une entrée en sortie de l'inverseur 14', via l'organe de commutation S2, de même qu'une seconde entrée de la porte

24. La sortie de cette dernière attaque une entrée d'une porte 25, dite de contrôle d'accès, qui est de type NAND. Un condensateur 26 est relié par une première borne en sortie de l'inverseur 23, via une diode 27 et une résistance 28 en série, ainsi que par une seconde borne reliée à la borne "-" de la cellule associée à l'interface de mesure qui le comporte. Ce condensateur se charge dès la première impulsion d'un train d'impulsions transmise par l'organe de commutation S1 alors positionné à l'état passant et il se maintient pratiquement chargé pour la durée de ce train. Une résistance 29 montée en parallèle au condensateur 26 permet sa décharge suite à la fin d'un train.

Le point commun au condensateur 26 et aux résistances 28 et 29 est relié à l'entrée d'un premier inverseur logique 30 en série avec un second inverseur 31 dont la sortie est reliée à l'anode d'une diode 32. Un montage analogue est réalisé à l'aide du condensateur 26', des résistances 28' et 29', des inverseurs 30', 31' et de la diode 32'. Les diodes 32 et 32' et une résistance 34, reliée à la borne "-", sont connectées en un même point pour former un circuit de type OU logique. La sortie de ce circuit commande l'entrée de données D et l'entrée de remise à "zéro" d'une bascule 33, de type D, dite de transfert d'impulsion.

Le condensateur 26 se vide en cas d'absence prolongée d'impulsion reçue, en pratique au-delà d'un laps de temps supérieur à un délai déterminé correspondant au temps de décharge de ce condensateur 26, via la résistance 29. Le signal de sortie de l'inverseur 30 est alors au niveau "un" ce qui positionne l'organe de commutation S2 à l'état passant, alors que le signal de sortie de niveau "zéro" de l'inverseur 31 positionne l'organe de commutation S4 à l'état bloquant. La bascule de transfert 33 a alors son entrée de données D et son entrée de remise à "zéro" RAZ maintenues à "zéro".

Le circuit de commande 21 comporte aussi un second montage composé par des composants référencés 23' et de 26' à 32' qui sont agencés comme le sont les composants correspondants référencés 23 et de 26 à 32 de manière à avoir un rôle vis-à-vis des impulsions parvenant éventuellement par le port S/E qui soit identique à celui évoqué ci-dessus pour les impulsions parvenant éventuellement par le port E/S. Ceci se traduit notamment par le fait que, comme précédemment, le condensateur 26' se trouve déchargé en cas d'absence prolongée d'impulsion en provenance du port S/E, via l'organe de commutation S2, lorsque ce dernier est lui-même positionné à l'état passant et qu'il y a une absence prolongée d'impulsion en provenance du port E/S. Le signal de sortie de l'inverseur 30' est alors de niveau "un" et positionne l'organe de commutation S1 à l'état passant, alors que celui de l'inverseur 31' positionne l'organe de commutation S3 à l'état bloquant.

Comme déjà indiqué, en cas d'absence prolongée d'impulsion parvenant par l'un ou l'autre des ports E/S, S/E, les organes de commutation S3 et S4 sont bloquants et les organes de commutation S1 et S2 sont passants en attente d'une impulsion dont l'arrivée chargera l'un ou l'autre des condensateurs 26, 26'. L'arrivée d'une impulsion nouvelle entraîne la rupture temporaire de celle des deux liaisons d'entrée, établies via les organes de commutation S1, S2, qui n'est pas celle par l'intermédiaire de laquelle l'impulsion a été reçue et assure la charge d'un des condensateurs 26, 26'. L'organe de commutation S1 ou S2, correspondant, est alors commandé à l'état bloquant pour un laps de temps qui correspond au moins au temps de décharge du condensateur ayant reçu l'impulsion.

Simultanément, il y a mise à l'état passant de celui des deux organes de commutation S3 ou S4 qui est relié à celui des deux ports E/S, S/E par l'intermédiaire duquel l'impulsion reçue n'a pas été transmise. Cette mise à l'état passant commandée par le changement de niveau du signal de sortie de l'un des inverseurs 31 ou 31' entraîne la possibilité d'utilisation en tant que sortie de celui des deux ports E/S, S/E par l'intermédiaire duquel l'impulsion n'a pas été reçue.

L'arrivée d'une première impulsion d'un train d'impulsions parvenant au circuit de commande 21 via un port, tel le port E/S, entraîne l'apparition d'un créneau qui est retardé du temps de charge du condensateur 26 en sortie d'inverseur 31. Il y a, en conséquence, application d'un signal de niveau logique "un" à l'entrée D de la bascule de transfert 33. L'entrée d'horloge H de la bascule de transfert 33 est reliée en sortie de la porte 24 et recopie donc en sortie Q le niveau logique présent à l'entrée D et le niveau logique inverse en sortie Q. La réception d'une première impulsion d'un train par le circuit de commande 21, via l'organe de commutation S1, entraîne l'application de cette première impulsion à l'entrée d'horloge H de la bascule de transfert 33, via la porte 24, alors que l'entrée RAZ de cette bascule est encore au niveau "zéro". Ceci inhibe la bascule de transfert 33, dont la sortie Q reste au niveau "zéro" ce qui empêche la transmission, hors du module et via la porte de contrôle 25, de cette première impulsion qui est considérée comme une impulsion d'ordre pour le module 2 dont font notamment partie la bascule de transfert 33 et la porte de contrôle 25.

Cette dernière est reliée à la sortie de la porte 24 par une première entrée et à la sortie de données Q de la bascule de transfert 33 par une seconde entrée, elle est aussi reliée par un inverseur logique 35 à un point commun aux organes de commutation S3 et S4. Elle assure donc la transmission des impulsions qu'elle reçoit de la porte 24, sous le contrôle de la bascule de transfert 33, à l'exception de la première impulsion de chaque nouveau train reçu par le module 2 qui la comporte, via l'organe de commutation S1, pour les raisons évoquées ci-dessus et dans l'exemple ici pris en compte.

Les impulsions transmises par la porte de contrôle 25 sont appliquées au point commun aux organes de commutation S3 et S4 de manière à être transmises par celui de ces organes qui est alors passant, soit par l'organe de commutation S4, lorsque les impulsions proviennent au circuit de commande 21 au travers de l'organe de commutation S1, soit par l'organe de commutation S3, lorsque ces impulsions proviennent au travers de l'organe de commutation S2. En particulier, lorsqu'un module 2 est compris entre deux autres modules 2, les impulsions qu'il retransmet sont émises soit via le port S/E qu'il comporte vers le module 2 voisin relié à ce port par son propre port E/S, si l'organe de commutation S4 est passant, soit encore par le port E/S qu'il comporte vers l'autre module voisin relié à ce port E/S par son propre port S/E, si c'est l'organe S3 qui est alors passant. La fin d'un train d'impulsions, transmis via l'inverseur 31, entraîne la décharge de celui des condensateurs 26 ou 26' alors chargé et en conséquence la remise à "zéro" de la bascule de transfert 33.

Cette dernière commande le sous-module d'exploitation 6 du module 2, elle est ici supposée reliée par sa sortie Q à l'entrée C de commande de ce sous-module, par une liaison de commande 12, comme évoqué plus haut, ceci n'étant pas détaillé ici dans la mesure où ce sous-module n'a qu'un rapport indirect avec l'invention. Dans un exemple de réalisation non représenté, cette bascule permet de commander l'alimentation d'au moins un élément de contrôle d'accès du sous-module d'exploitation pendant le palier séparant la première impulsion d'un train reçu via l'un des ports E/S, S/E, de celle qui la suit.

La bascule de transfert 33 commande aussi le circuit de sélection 22 du module 2 qui la comporte, à cet effet elle est ici reliée par une sortie $\overline{Q}$ à une première entrée d'une porte 36, de type ET, de ce circuit.

La porte 36 est aussi reliée à la sortie de la porte 24 que comporte le circuit de commande 21 du module 2. Elle reçoit donc la première impulsion de chaque train reçu par ce module ainsi qu'on le voit sur le diagramme 4A où sont successivement représentées les premières impulsions de quatre trains successifs, les deux premières étant supposées de type A alors que les deux autres sont supposées de type B. La porte 36 reçoit aussi le signal de la sortie $\overline{Q}$ de la bascule de transfert 33, ce signal étant de niveau "un" jusqu'à l'apparition de la seconde impulsion des trains comme cela peut être déduit de ce qui a été indiqué plus haut et comme montré sur le diagramme 4B.

En conséquence et comme montré par le diagramme 4C la sortie de la porte 36 recopie la première impulsion de chaque train reçu qu'elle applique aux entrées d'horloge respectives d'un monostable 37 et d'une bascule 38, l'entrée de données D de cette dernière étant attaquée par le signal présent à une sortie Q du monostable 37. Ce dernier, déclenché par le front montant de la première impulsion de chaque train, est remis au niveau "zéro" par le signal de la sortie $\overline{Q}$ de la bascule de transfert 33.

Dans une forme préférée de réalisation, le monostable 37 a une constante de temps choisie comprise entre la durée d'une impulsion d'ordre A et la durée plus longue d'une impulsion d'ordre B, il produit donc des impulsions référencées T sur le diagramme 4D.

La bascule 38, de type D, est déclenchée sur le front descendant des impulsions dont le front montant a commandé le monostable 37. Elle traduit donc si une impulsion d'ordre est de type A ou B par les niveaux respectifs de ses sorties, en particulier le signal en sortie $\overline{Q}$ de cette bascule 38 est de valeur "zéro" après un signal d'horloge reçu, lorsque l'impulsion reçue de la porte 36 est de type A et il est de valeur "un" lorsque l'impulsion reçue de la porte 36 est de type B, c'est-à-dire longue, comme montré sur le diagramme 4E.

Une bascule 39, de type D, est reliée par son entrée de données D à la sortie $\overline{Q}$ de la bascule 38 et par son entrée d'horloge à la sortie de la porte 36, via un inverseur 40. Elle restitue sur sa sortie Q l'information présente sur son entrée de données D, sur le front descendant du signal d'horloge qui lui est fourni par l'inverseur 40, soit pratiquement sur le front montant de la première impulsion du train suivant, ainsi que le montre le diagramme 4F pour la deuxième des premières impulsions de type B.

Les sorties complémentaires Q et $\overline{Q}$ de la bascule 39 sont respectivement reliées l'une à une entrée d'incrémentation i d'un compteur binaire 41 via une porte 42, de type ET, et l'autre à une entrée de décrémentation d de ce même compteur via une porte 43 également de type ET.

La porte 42 est ici une porte à trois entrées, une première de ces entrées est reliée à la sortie Q de la bascule 39, en accord avec ce qui est indiqué ci-dessus, une seconde de ces entrées est reliée en sortie d'une porte 44, de type ET, et la troisième est reliée à une sortie M de signal du compteur 41 qui passe au niveau "zéro", lorsqu'une valeur maximale d'incrémentation est atteinte par comptage. La porte 44 est reliée par une première entrée à la sortie de la porte 36 et par une seconde entrée en sortie d'un inverseur logique 45 relié à la sortie Q du monostable 37.

La porte 43 est aussi une porte à trois entrées, une première de ces entrées est reliée à la sortie $\overline{Q}$ de la bascule 39, en accord avec ce qui est indiqué ci-dessus, une seconde de ces entrées est reliée en sortie d'une porte 46, de type ET, et la troisième est reliée à une sortie m de signal du compteur 41 qui passe au niveau "zéro", lorsqu'une valeur maximale de décrémentation est atteinte par comptage. La porte 46 est reliée par une première entrée à la sortie de la porte 36, via un inverseur logique 47, et par une seconde entrée à la sortie Q du monostable 37.

La bascule 39 recopie la bascule 38 avec retard comme le montre la comparaison des diagrammes 4F et 4E.

La sortie $\overline{Q}$ de cette bascule 39 passe au niveau "un" lorsqu'une première et courte impulsion - de type A - d'un train été précédée d'une première impulsion de train qui était courte, ainsi que le montre le diagramme 4G.

L'arrangement logique composé des portes 44, 46 et des inverseurs 45, 47 produit une impulsion de niveau "un" en sortie de la porte 44 à chaque fois que la sortie du monostable 37 est au niveau "zéro", alors que la sortie de la porte 36 est au niveau "un", ce qui se produit lorsque la première impulsion d'un train est une impulsion de type B dont la durée est supérieure à la constante de temps du monostable 37, comme le montre le diagramme 4H.

De manière analogue, ce même arrangement logique produit une impulsion de niveau "un" en sortie de la porte 46 à chaque fois que la sortie du monostable 37 est au niveau "un", alors que la sortie de la porte 36 est au niveau "zéro", ce qui se produit lorsque la première impulsion d'un train est une impulsion de type A dont la durée est inférieure à la constante de temps du monostable 37, comme le montre le diagramme 4I.

Le signal de sortie de la porte 42 est donc à l'état "un" à partir du moment où le signal à la sortie Q de la bascule 39, tel qu'ici représenté par le diagramme 4F, le signal à la sortie de la porte 44, tel qu'ici représenté par le diagramme 4H, et le signal fourni par la sortie M du compteur 41 ont un même niveau "un".

Ceci est susceptible de se produire lorsque le signal de sortie de la sortie M évoquée ci-dessus se maintient à un niveau "un" qui traduit que la valeur de comptage maximale du compteur n'a pas encore été atteinte, et qu'une première impulsion de type B reçue pour un train succède à une première impulsion de même type reçue au cours du train immédiatement précédent. Il est alors appliqué une impulsion de valeur "un" à l'entrée d'incrémentation i du compteur 41 par la porte 44.

D'une manière analogue, le signal de sortie de la porte 46 est à l'état "un" à partir du moment où le signal à la sortie Q de la bascule 39, le signal à la sortie de la porte 46, tel qu'ici représenté par le diagramme 4I, et le signal fourni par la sortie m du compteur 41 ont un même niveau "un".

Ceci est susceptible de se produire lorsque le signal de sortie de la sortie m évoquée ci-dessus se maintient à un niveau "un" qui traduit que la valeur de comptage minimale du compteur n'a pas encore été atteinte, et qu'une première impulsion de type A reçue pour un train succède à une première impulsion de même type reçue au cours du train immédiatement précédent. Il est alors appliqué une impulsion de valeur "un" à l'entrée de décrémentation d du compteur 41 par la porte 46. Il n'y a par contre pas d'impulsion produite en cas d'une succession de deux premières impulsions ayant des types différents.

Le compteur 41 est ici supposé comporter une pluralité de sorties de comptage qui produisent donc une commande sous une forme numérique correspondant aux nombres d'impulsions successivement reçues au niveau de l'une ou de l'autre de ses entrées d'incrémentation et de décrémentation i et d, selon un processus connu.

Les sorties de comptage du compteur 41 sont ici supposées reliées à autant d'entrées d'un convertisseur numérique-analogique 48 qui traduit donc toute commande numérique affichée par le compteur 41 en un signal analogique au niveau d'une sortie SA, par exemple par une tension exploitable pour une commande au niveau du sous-module d'exploitation 6.

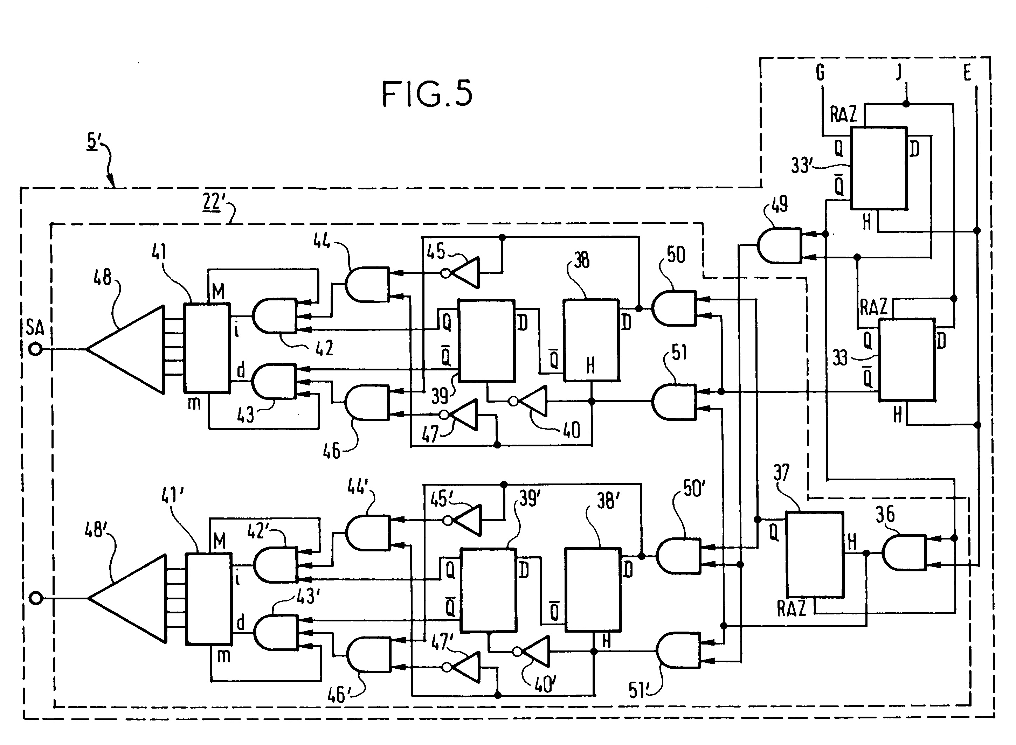

Par ailleurs, il est aussi envisageable d'intervenir sur plus d'une commande au niveau de chaque module comme montré sur la figure 5 qui est relative à une variante du sous-ensemble de traitement d'ordre 5 présenté en figure 3. Seuls sont représentés sur cette figure 5, un circuit de sélection 22' ici supposé prévu pour permettre l'exploitation de deux ordres différents et donc l'obtention de deux commandes dans un sous-ensemble de traitement d'ordre 5' se différenciant de celui présenté en figure 3 par ce circuit de sélection 22' et par un circuit de commande de module dont seuls les éléments modifiés par rapport au circuit de commande de module 21 ont été présentés sur la figure 5.

Le sous-ensemble de traitement d'ordre 5' comporte donc un montage d'entrée-sortie, non représenté, qui est supposé identique au montage d'entrée-sortie 13 de la figure 3, un circuit de commande de module, partiellement représenté qui se différencie notamment du circuit de commande de module 21 de la figure 3 par le fait qu'il comporte une bascule 33' supplémentaire en plus de la bascule de transfert 33, et par un circuit de sélection 22' dérivé du circuit de sélection 22 de la figure 3.

La bascule de transfert 33 de la variante envisagée sur la figure 5 est supposé reliée à la sortie de la porte 24 du circuit de commande de module qui la comporte par son entrée d'horloge H, via un point commun référencé E sur les figures 3 et 5. Elle est aussi supposée reliée par son entrée de données D et par son entrée de remise à "zéro" au point, référencé J sur les figures 3 et 5, qui est commun aux cathodes des diodes 32 et 32' présentées en figure 3. Cette bascule de transfert 33 agit sur ici une des parties du circuit de sélection 22' montré en figure 5, comme elle agissait précédemment sur le circuit de sélection 22 de la figure 3, elle transmet donc au circuit 22' la première impulsion d'ordre de chaque nouveau train reçu.

Le circuit de sélection 22' est ici supposé composée de deux parties similaires destinées à prendre alternativement en compte les deux premières impulsions reçues à chaque train. Ceci permet par exemple d'obtenir deux valeurs d'ordre différentes pour un même module 2, sans augmenter le nombre de fils desservant ce module à des fins de gestion. Cette gestion concerne par exemple les éléments d'une batterie comme envisagé pour l'ensemble présenté en figure 1. En première approximation, chacune des deux parties similaires du circuit de sélection 22' de la figure 5 correspond structurellement au circuit de sélection 22 de la figure 3. En particulier la portion de circuit que constituent les composants référencés 38 à 48, de la figure 3 se retrouve à l'identique dans une première partie du circuit de sélection 22' de la figure 5 et la seconde partie de ce circuit 22' duplique cette même portion de circuit, les composants correspondants figurant dans cette seconde partie étant ici référencés de 38' à 48'.

Une logique de distribution, ici composée à l'aide de cinq portes logiques, de type ET, référencées de 49 à 51 et 50', 51', est placée entre des entrées de chacune des deux parties similaires du circuit de sélection 22' et des sorties des bascules 33, 33' et d'une bascule 37 ayant même fonction que celle prévue dans le circuit de sélection 22 décrit en liaison avec la figure 3.

Les bascules 33, 33' du sous-ensemble de traitement d'ordre présenté sur la figure 5 forment un registre à décalage qui reçoit les impulsions d'ordre transmises en premier dans les trains reçus par le module 2 les comportent. Ces impulsions sont transmises, via le point E et via la porte 24 du circuit de commande de ce module, cette porte n'étant pas représentée en figure 5. Les bascules 33, 33' reçoivent identiquement sur leurs entrées de remise à "zéro" respectives le signal transmis via le point J par l'une ou l'autre des diodes 32, 32', non représentées sur la figure 5, du sous-ensemble de traitement d'ordre 5' qui les comporte.

Comme la bascule 33' est reliée par sa sortie Q et via le point G à l'entrée de la porte 25, non représentée sur la figure 5, du circuit de commande de module qui la comporte, elle interdit la transmission des deux premières impulsions d'un train hors du module de la manière utilisée par la porte 33 pour chaque première impulsion dans le cas du circuit de commande de module 21 présenté sur la figure 3, dans l'exemple envisagé.

Comme l'entrée de données D de la bascule de transfert 33 présentée sur la figure 5 est aussi reliée au point J, cette bascule de transfert 33 fonctionne exactement dans les mêmes conditions que celle présentée sur la figure 3, elle applique ici un signal de niveau "un" sur une première entrée des portes 51 et 52 par sa sortie $\bar{Q}$, tant que le niveau du signal binaire transmis via le point J reste "un", c'est-à-dire depuis l'arrivée d'une première impulsion et jusqu'à l'apparition de l'impulsion suivante au cours d'un train.

La bascule de transfert 33 commande aussi, par sa sortie Q, l'entrée de données D de la bascule 33' et une première entrée de la porte 49.

La bascule 33' commande une seconde entrée de la porte 49 et une entrée de la porte 36 par sa sortie $\bar{Q}$, la réception des deux premières impulsions d'un train par le module qui la comporte ne modifie pas le signal binaire produit par cette sortie $\bar{Q}$ qui est alors de valeur "un" et qui ne bascule à "zéro" qu'après réception d'une nouvelle impulsion d'ordre du même train. En conséquence, la porte 36 produit un signal de sortie de valeur "un" à l'occasion des deux premières impulsions de chaque train reçu, alors que la porte 49 produit un signal de sortie de valeur "un" à l'occasion de chaque seconde impulsion de chaque train.

Le monostable 37 connecté en sortie de la porte 36 produit donc lui aussi une impulsion T pour chacune des deux premières impulsions de chaque train reçu par le module qui le comporte. Chacune des impulsions T produites est appliquée à une première entrée de chacune des portes 50, 50'. Une seconde entrée de la porte 50 est reliée à la sortie Q de la bascule 33, cette porte 50 étant reliée par sa sortie à l'entrée de données D de la bascule 38 qui est donc commandée de la même manière que l'était la bascule 38 présentée en figure 3, à chaque première impulsion de train et qui donc applique alors un signal de niveau un pendant un temps correspondant à T à cette entrée de données D de bascule 38.

Une seconde entrée de la porte 50' est reliée à la sortie $\bar{Q}$ de la bascule 33', via la porte 49, cette porte 50' étant reliée par sa sortie à l'entrée de données D de la bascule 38' qui est donc commandée de la même manière que la bascule 38 présentée sur la même figure 5 qu'elle. Cette commande ne s'effectue toutefois qu'à l'occasion de la seconde impulsion de chaque train reçu par le module qui comporte ces portes et elle se traduit par l'application d'un signal de niveau "un" pendant un temps correspondant à T à l'entrée de données D de la bascule 38'.

Les portes 51 et 51' sont reliées par une première entrée en sortie de la bascule 36 et reçoivent donc les deux premières impulsions de chaque train, ces impulsions étant de l'un ou l'autre des deux types A et B définis plus haut et donc de durées plus ou moins grandes que la constante T définie par le monostable 37, suivant les cas.

La porte 51 est aussi reliée par une seconde entrée en sortie $\bar{Q}$ de la bascule 33 de manière à n'autoriser la transmission que de la première impulsion d'un train reçu à une entrée-commune à la bascule 38, aux inverseurs 40, 47 et à la porte 44. Cette première impulsion est traitée par les éléments 38 à 48 de la première partie de circuit de sélection 22', de la manière déjà évoquée pour le circuit de sélection 22 qui est montré en figure 3 et qui comporte le même arrangement d'éléments.

La porte 51' est aussi reliée par une seconde entrée en sortie $\bar{Q}$ de la bascule 33, via la porte 49, de manière à n'autoriser la transmission que de la seconde impulsion d'un train reçu à une entrée commune à la bascule 38', aux inverseurs 40, 47 et à la porte 44. Cette seconde impulsion est traitée par les éléments 38' à 48' de la seconde partie de circuit de sélection 22', de la manière déjà évoquée pour la première partie de ce dernier.

Le circuit de sélection 22' permet donc d'intervenir sur deux commandes au niveau d'un même module et par conséquent d'intervenir sur deux commandes différentes pour chacun des modules 2 d'un ensemble qui en comporte une pluralité comme envisagé ici. Chaque module ne prend en compte que les deux premières impulsions de chaque train qu'il reçoit et qu'il considère comme les impulsions d'ordre qui lui sont destinées, il assure la transmission des impulsions qui suivent éventuellement dans chaque train reçu.

Il doit bien entendu être compris qu'il est aussi possible d'intervenir sur un nombre N plus grand d'ordres pour chaque module par réservation d'un nombre N équivalent des premières impulsions successivement reçues dans un même train par un module et par extension correspondante du circuit de sélection 22, alors notamment doté d'un nombre N de parties telles qu'évoquées en liaison avec la figure 5.

## Revendications

1.    Procédé de transmission d'ordres, telles que des ordres de variation par pas ou de marche-arrêt, par impulsions d'une unité de commande (3) à différents modules (2) par l'intermédiaire d'une liaison (4), caractérisé en ce que cette unité émet des impulsions produites au rythme d'une horloge commune et regroupées par train pour la transmission des ordres aux modules, en ce que les ordres de variation d'une commande dans un premier sens, de variation dans un second sens et de maintien d'ordre en un état inchangé sont respectivement transmis chacun par une suite particulière de deux impulsions, ces impulsions étant d'un premier ou d'un second type.

2. Procédé de transmission d'ordres, selon la revendication 1, caractérisé en ce que cette unité émet des impulsions produites au rythme d'une horloge commune et regroupées par train pour la transmission des ordres aux modules, en ce que deux impulsions d'ordre émises par l'unité de commande à destination d'une commande déterminée pour un module déterminé sont d'un même premier type (A), lorsqu'elles correspondent à un ordre de variation de cette commande dans un premier sens de variation donné, en ce que ces impulsions sont d'un second type (B), lorsqu'elles correspondent à un ordre de variation de cette commande dans un sens de variation inverse du premier sens de variation donné, en ce que ces impulsions alternent successivement de type, lorsqu'elles correspondent à un ordre de maintien de ladite commande en un état inchangé.

3. Procédé selon la revendication 1, caractérisé en ce que chaque module prélève les impulsions relatives à tout ordre qui lui est destiné dans les trains qu'il reçoit et transmet les autres impulsions que contiennent éventuellement les trains reçus.

4. Procédé selon au moins l'une des revendications 1,2 et 3, caractérisé en ce que l'unité de commande émet des trains successifs dans lesquels la ou les impulsions d'ordre destinées à une même commande d'un même module ont toujours même position parmi les impulsions des suites d'impulsions constituant respectivement ces trains, lorsque ceux-ci sont transmis dans un même sens, ces positions étant inversées, lorsque deux trains successifs sont transmis en sens inverse depuis l'unité de commande (3) par la liaison (4).

5. Procédé selon au moins l'une des revendications 1, 2, 3 et 4, caractérisé en ce que l'unité de commande émet des trains successifs d'impulsions qui sont composés chacun d'un même nombre d'impulsions d'ordre, ce nombre étant au moins égal au nombre de modules, chaque module prélevant un nombre entier d'impulsions d'ordre qui est éventuellement identique pour chacun des modules.

6. Procédé selon au moins l'une des revendications 1 à 5, caractérisé en ce que l'unité de commande émet des trains successifs d'impulsions qui comportent chacun une impulsion d'ordre par commande pour chacun des modules, l'émission de deux impulsions d'un même des deux types chacune dans un des deux trains successifs pour une même ordre à destination d'un même module traduisant une variation d'un pas de la commande dans le sens défini par le type de ces deux impulsions.

7. Procédé, selon au moins l'une des revendications 1 à 6, caractérisé en ce que les impulsions d'ordre du premier et du second type se différencient par leurs largeurs respectives.

8. Agencement pour la mise en oeuvre du procédé selon au moins l'une des revendications 1 à 7, dans un ensemble incorporant au moins une unité de commande (3) transmettant des ordres sous la forme d'impulsions regroupées par trains successifs pour agir sur des commandes dans différents modules (2) reliés à une liaison (4) transmettant ces trains d'impulsions, chaque module comportant lui-même au moins un sous-ensemble, dit de traitement d'ordre, (5) recevant les impulsions qui sont transmises à ce module par la liaison, ce sous-ensemble comportant des moyens (13, 21) pour prélever la ou les (N) impulsions d'ordre destinées au module dans chaque train et pour transférer les autres impulsions du même train en vue de la continuation de leur transmission, chaque module étant caractérisé en ce qu'il comporte de plus des moyens de sélection (22), pour commander l'évolution à apporter à chacune des (N) commandes destinée(s) au module, en fonction du type des impulsions d'ordre transmises en même position au cours des trains successifs pour la commande considérée.

9. Agencement, selon la revendication 8, caractérisé en ce qu'un module (2) comporte des moyens de sélection (22 ou 22') qui sont activés par les moyens de prélèvement (21), lorsque des impulsions d'ordre destinés au module sont reçues, qui comportent autant de parties identiques individuellement affectées chacune au traitement d'un ordre pour une commande qu'il y a d'impulsions d'ordre prélevées à chaque train par le module, chacune des dites parties identiques des moyens de sélection comportant des moyens (37, 38, 39 ou 37', 38', 39') pour déterminer l'évolution à réaliser sur une commande à partir de deux impulsions d'ordre transmises avec une même position au cours de deux trains successifs pour la commande considérée.

10. Agencement, selon la revendication 9, caractérisé en ce qu'un module (2) incorpore des moyens de prélèvement et de transfert (21) qui comportent des moyens (33, 33', 49, 25) pour déclencher un prélèvement sélectif de chacune des impulsions d'ordre reçues en début de train qui sont destinées au module et pour autoriser la transmission des impulsions suivantes reçues pour le même train.

11. Agencement, selon la revendication 9, caractérisé en ce qu'un module (2) incorpore des moyens de sélection (22) comportant des moyens de traduction d'ordre (41, 41'), de type compteur binaire, éventuellement associés à un convertisseur numérique-analogique (48), dans chacune des parties individuellement affectées chacune à un ordre, les dits moyens étant commandés par les moyens de détermination d'évolution (37, 38, 39 ou 37', 38', 39') de la partie qui les comporte.

12. Agencement, selon au moins l'une des revendications 8 à 11, caractérisé en ce que chaque module (2) est inséré entre deux tronçons de la liaison (4) de transmission des ordres par un montage d'entrée-sortie (13) contenu dans le sous-ensemble de traitement d'ordre qu'il comporte, ce montage étant relié à chacun des deux tronçons par un port différent d'entrée-sortie pour autoriser une transmission des impulsions d'ordre depuis l'unité de commande qui les émet dans l'un ou l'autre des deux sens de transmission possible sur la liaison qui est bouclée au niveau de cette unité et au travers des modules en série.

13. Agencement, selon au moins l'une des revendications 8 à 11, caractérisé en ce qu'il est incorporé dans un ensemble où les modules (2) comportent chacun un sous-module de traitement d'ordre (5) auquel est associé un sous-module d'exploitation (6) supervisant individuellement en relation avec l'unité de commande (3) le fonctionnement d'un ou d'un groupe d'éléments (7) qui sont sous contrôle dans l'ensemble.

FIG.1

# FIG. 2

2A

$\overline{I}$     A   B   B   A   F

$\overline{II}$     B   A   A   B   F

$\overline{III}$     A   B   B   A   F

№ module | M1 | M2 | M3 | M4 | | M1 | M2 | M3 | M4 | | M1 | M2 | M3 | M4 |

2B

$\overline{IV}$     A   B   B   A   F

$\overline{V}$     B   A   A   A   F

$\overline{VI}$     B   B   B   B   F

№ module | M1 | M2 | M3 | M4 | | M1 | M2 | M3 | M4 | | M1 | M2 | M3 | M4 |

EP 0 752 690 A1

FIG.3

EP 0 752 690 A1

# FIG.4

EP 0 752 690 A1

## FIG.5

EP 0 752 690 A1

**Office européen**

**des brevets**

## RAPPORT DE RECHERCHE EUROPEENNE

Numero de la demande

EP 96 40 1466

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE-A-43 29 740 (BENDRICH HORST) 9 Mars 1995<br>* colonne 3, ligne 2 - colonne 5, ligne 7; figures 1,2 *<br><br>--- | 1,3-5,7, 8,12,13 | G08C19/22<br>H04Q9/00 |
| A | US-A-3 990 047 (SACHS JEAN-PIERRE ET AL) 2 Novembre 1976<br>* colonne 1, ligne 51 - ligne 66 *<br>* colonne 3, ligne 4 - colonne 4, ligne 62; figures 1,2 *<br><br>----- | 1 | |

**DOMAINES TECHNIQUES RECHERCHES (Int.Cl.6)**

G08C
H04Q

Le présent rapport a été établi pour toutes les revendications

| Lieu de la recherche | Date d'achèvement de la recherche | Examinateur |
|---|---|---|
| LA HAYE | 30 Août 1996 | Wanzeele, R |